# DEMANDE DE BREVET EUROPEEN

(11) **EP 3 700 172 A1**
(43) Date de publication de la demande: **26.08.2020**
(21) Numéro de dépôt: 20157837.4
(22) Date de dépôt: 18.02.2020
(51) Int. Cl.: H04L 29/08, H04W 4/40, H04W 4/44, H04W 4/46

(54) **DISPOSITIF ÉLECTRONIQUE DE BRIDAGE, DISPOSITIF DE SURVEILLANCE, VÉHICULE AUTOMOBILE AUTONOME, SYSTÈME DE TRANSPORT, PROCÉDÉ DE BRIDAGE ET PRODUIT PROGRAMME ORDINATEUR ASSOCIÉS**

(30) Priorité: 25.02.2019 FR 1901894
(71) Demandeur: Transdev Group, 92130 Issy les Moulineaux (FR)
(72) Inventeur: BEAUVILLAIN, Alexis, 91300 MASSY (FR)
(74) Mandataire: Lavoix

(57) **Abrégé**

L'invention concerne un dispositif électronique de bridage (41A, 41B) pour brider le fonctionnement d'un système, le système étant choisi parmi le groupe consistant en :
- un dispositif de surveillance (14) à distance d'une flotte de véhicules automobiles autonomes (12) pour le pilotage à distance de la flotte par un opérateur ; et
- un véhicule autonome (12) appartenant à une flotte de véhicules (12) surveillés par un dispositif de surveillance (14).

Le dispositif électronique de bridage (41A, 41B) comprend :
- un module de mesure (42) d'une latence dans la communication entre l'un des véhicules autonomes (12) et le dispositif de surveillance (14) ; et
- un module de limitation pour limiter le pilotage dudit véhicule autonome (12) par l'opérateur en fonction de la latence mesurée.

## Description

La présente invention concerne un dispositif électronique de bridage pour brider le fonctionnement d'un système, le système étant choisi parmi le groupe consistant en : un dispositif de surveillance à distance d'une flotte de véhicules automobiles autonomes pour le pilotage à distance de la flotte par un opérateur et un véhicule autonome appartenant à une flotte de véhicules surveillés par un dispositif de surveillance à distance permettant le pilotage à distance de la flotte par un opérateur.

L'invention concerne le domaine des véhicules automobiles autonomes, en particulier des véhicules automobiles autonomes ayant un niveau d'automatisation (de l'anglais *level of automation*) supérieur ou égal à 3 selon le barème de l'Organisation Internationale des Constructeurs Automobiles (OICA).

En particulier, l'invention concerne le pilotage à distance d'un véhicule par un opérateur. Il est connu, lorsqu'un véhicule autonome rencontre une situation problématique, de permettre à un opérateur à distance de prendre le contrôle du véhicule afin de résoudre cette situation. Par exemple, lorsqu'un véhicule rencontre un obstacle situé sur une voie délimitée par un trottoir et une ligne blanche continue, le véhicule est éventuellement dans l'incapacité de choisir une stratégie de contournement de l'obstacle respectant les consignes de sécurités imposées. L'opérateur prenant le contrôle du véhicule peut alors mieux se rendre compte de la situation et envoyer une consigne au véhicule permettant de résoudre la situation problématique tout en s'assurant de la sécurité des passagers du véhicule.

Toutefois, la sécurité des passagers du véhicule lors de ce pilotage à distance peut encore être améliorée, notamment en cas de consigne envoyée de contournement d'un obstacle ou de franchissement d'une ligne blanche par le véhicule.

Un objectif de l'invention est ainsi de fournir un dispositif électronique de bridage permettant une sécurité améliorée pour les passagers du véhicule.

A cet effet, l'invention a pour objet un dispositif électronique de bridage du type précité, dans lequel le dispositif de surveillance et le ou chaque véhicule autonome sont propres à communiquer entre eux, le dispositif électronique de bridage comprenant : un module de mesure d'une latence dans la communication entre l'un des véhicules autonomes et le dispositif de surveillance ; et un module de limitation pour limiter le pilotage dudit véhicule autonome par l'opérateur en fonction de la latence mesurée.

Selon un mode de réalisation particulier de l'invention, le module de limitation est configuré pour limiter le pilotage lorsque la latence mesurée est supérieure à un seuil de sécurité prédéterminé.

L'invention a également pour objet un dispositif de surveillance comprenant un dispositif électronique de bridage tel que défini ci-dessus, le ou chaque véhicule autonome comprenant au moins un capteur embarqué propre à envoyer au moins une information au dispositif de surveillance, le dispositif de surveillance étant propre à recevoir au moins une information d'au moins un premier capteur constitué par un capteur embarqué à bord de l'un des véhicules autonomes et comprenant au moins un écran d'affichage propre à afficher l'au moins une information, le module de mesure étant configuré pour mesurer la latence entre l'envoi de l'au moins une information par le premier capteur et l'affichage de l'au moins une information sur l'écran d'affichage.

Selon des modes de réalisation particuliers de l'invention, le dispositif de surveillance présente également une ou plusieurs des caractéristiques suivantes, prise(s) isolément ou suivant toute(s) combinaison(s) techniquement possible(s) :
- le dispositif de surveillance comprend un module de commande propre à envoyer au moins une commande de mouvement à la flotte, le module de limitation étant propre à bloquer l'envoi de toute commande de mouvement au véhicule autonome ;
- le dispositif de surveillance est propre à recevoir au moins une information d'au moins un deuxième capteur, le deuxième capteur étant choisi parmi le groupe consistant en : un capteur embarqué à bord de l'un des véhicules autonomes et un capteur d'infrastructure disposé à l'extérieur des véhicules autonomes, le module de limitation étant propre à désactiver la communication entre le dispositif de surveillance et l'au moins un deuxième capteur ;
- le module de limitation est propre à désactiver la communication entre le dispositif de surveillance et au moins l'un des véhicules de la flotte ; et
- le dispositif de bridage comprend un module d'alerte propre à émettre un signal d'alerte en fonction de la latence calculée, l'écran d'affichage étant propre à afficher le signal d'alerte.

L'invention a également pour objet un véhicule automobile autonome comprenant un dispositif électronique de bridage tel que défini ci-dessus, le dispositif de surveillance comprenant un module de commande propre à envoyer au moins une commande de mouvement à la flotte, le véhicule automobile autonome comprenant au moins un module de réception propre à recevoir l'au moins une commande, le module de mesure étant configuré pour mesurer la latence entre l'envoi de l'au moins une commande par le module de commande et la réception de l'au moins une commande par le module de réception.

Selon un mode de réalisation particulier de l'invention, le véhicule autonome comprend un module de transmission propre à transmettre l'au moins une commande au reste du véhicule, le module de limitation étant propre à bloquer la transmission de toute commande de mouvement.

L'invention a également pour objet un système de transport comprenant un dispositif de surveillance tel que défini ci-dessus et une flotte de véhicules automobiles autonomes surveillée à distance par le dispositif de surveillance, chaque véhicule automobile autonome étant tel que défini ci-dessus.

L'invention a également pour objet un procédé de bridage du pilotage à distance d'un véhicule automobile autonome appartenant à une flotte de véhicules automobiles autonomes surveillée au moyen d'un dispositif de surveillance à distance, le procédé de bridage comprenant les étapes suivantes :
- calcul d'une latence dans la communication entre l'un des véhicules automobiles automnes et le dispositif de surveillance ; et
- limitation du pilotage dudit véhicule autonome par l'opérateur en fonction de la latence calculée.

L'invention a également pour objet un programme d'ordinateur comportant des instructions logicielles qui, lorsqu'elles sont exécutées par un ordinateur, mettent en oeuvre un procédé de bridage tel que défini ci-dessus.

L'invention sera mieux comprise à la lecture de la description qui va suivre, donnée uniquement à titre d'exemple et faite en se référant aux figures annexées parmi lesquelles :
**[****Fig 1****]** la figure 1 est une vue schématique d'un système de transport selon l'invention,
**[****Fig 2****]** la figure 2 est un diagramme en blocs illustrant un procédé de bridage mis en oeuvre par un dispositif de bridage embarqué dans un véhicule du système de transport de la figure 1, et
**[****Fig 3****]** la figure 3 est un diagramme en blocs illustrant un procédé de bridage mis en œuvre par un dispositif de bridage disposé dans un dispositif de surveillance du système de transport de la figure 1.

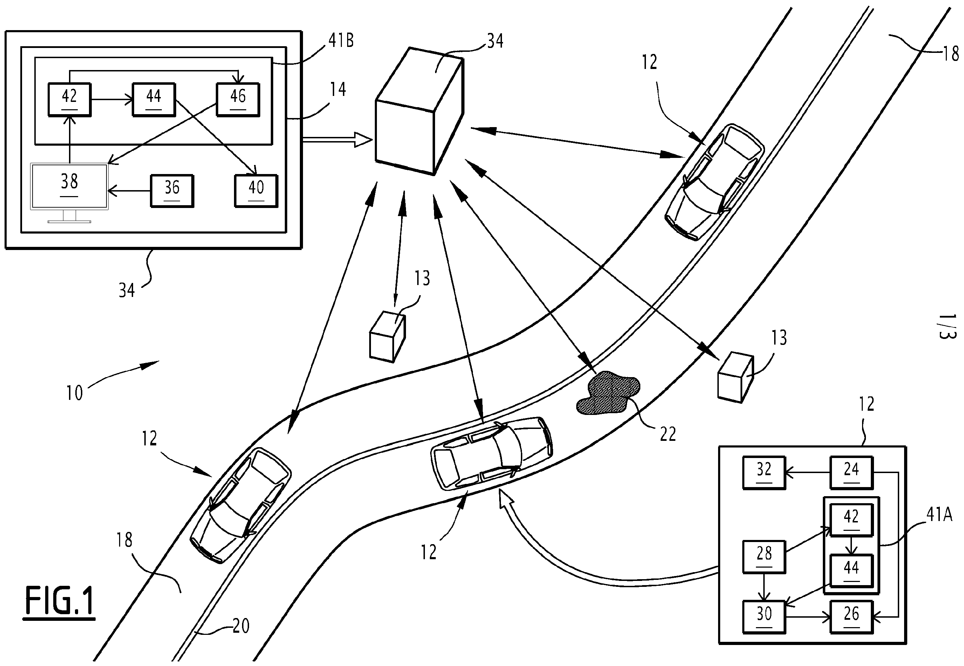

Comme représenté sur la figure 1, un système de transport 10 comprend une flotte d'au moins un véhicule 12, au moins un capteur 13, également appelé capteur d'infrastructure, et un dispositif 14 de surveillance à distance de la flotte de véhicules 12 pour le pilotage à distance de la flotte par un opérateur.

Chaque véhicule automobile 12 est propre à circuler le long de voie(s) de circulation 18. Chaque voie de circulation 18 est une partie d'une chaussée affectée à la circulation de véhicules dans un sens de circulation. La chaussée comprend par exemple une seule voie de circulation 18. En variante, comme représenté sur la figure 1, la chaussée comprend deux voies de circulation 18 associées à des sens de circulation opposés et séparées par une ligne blanche continue 20. Dans une autre variante, la chaussée comprend de deux à quatre voies de circulation 18 dans chaque sens de circulation. Chaque voie de circulation 18 est matérialisée par un marquage au sol comme une ligne blanche par exemple.

Sur l'exemple illustré de la figure 1, un obstacle 22 est situé sur l'une des voies de circulations 18. L'obstacle 22 est propre à gêner la circulation de l'un des véhicules 12 sur la voie de circulation 18. L'obstacle 22 est par exemple une pierre, de la terre, une partie de carrosserie de véhicule, un sac plastique ou une cavité dans ladite voie de circulation 18.

Par la suite, un unique véhicule 12 va être décrit. L'homme du métier comprendra que les autres véhicules 12 de la flotte sont similaires.

Le véhicule 12 comprend, de manière connue, des roues arrière, des roues avant, un moteur relié mécaniquement via une chaîne de transmission aux roues arrière et/ou avant pour l'entraînement desdites roues en rotation autour de leur axe, un système de direction, adapté pour agir sur les roues avant et/ou arrières du véhicule 12 de manière à modifier l'orientation de sa trajectoire, et un système de freinage, adapté pour exercer une force de freinage sur les roues du véhicule 12.

Le véhicule 12 est typiquement constitué par un véhicule à traction et/ou propulsion électrique. A cet effet, le moteur est constitué par un moteur électrique, et le véhicule 12 comprend une batterie électrique raccordée électriquement au moteur pour l'alimentation du moteur en électricité.

Le véhicule 12 est un véhicule automobile autonome. A cet effet, le véhicule comprend au moins un capteur 24, également appelé capteur embarqué, propre à détecter au moins une information relative au véhicule 12 ou à l'environnement du véhicule 12. En particulier, l'au moins un capteur 24 est propre à détecter l'obstacle 22 sur la voie de circulation 18. Chaque capteur 24 est par exemple une caméra, un capteur infrarouge, un radar, un LIDAR, un capteur de température, un capteur de pression et/ou un capteur d'humidité.

Le véhicule 12 comprend en outre un dispositif électronique de conduite autonome 26 adapté pour piloter le véhicule 12 de manière autonome en recevant des informations sur l'environnement du véhicule 12 par l'intermédiaire des capteurs 24 et en agissant sur le moteur, le système de direction et le système de freinage, de manière à modifier la vitesse, l'accélération et la trajectoire du véhicule 12 en réaction aux informations reçues.

Le véhicule 12 automobile autonome présente de préférence un niveau d'automatisation supérieur ou égal à 3 selon le barème de l'Organisation Internationale des Constructeurs Automobiles (OICA). Le niveau d'automatisation est alors égal à 3, c'est-à-dire une automatisation conditionnelle (de l'anglais *Conditional Automation*), ou égal à 4, c'est-à-dire une automatisation élevée (de l'anglais *High Automation*), ou encore égal à 5, c'est-à-dire une automatisation complète (de l'anglais *Full Automation*).

Selon le barème de l'OICA, le niveau 3 d'automatisation conditionnelle correspond à un niveau pour lequel le conducteur n'a pas besoin de surveiller en permanence la conduite dynamique, ni l'environnement de conduite, tout en devant toujours être en mesure de reprendre le contrôle du véhicule 12 automobile autonome. Selon ce niveau 3, le dispositif électronique de conduite autonome 26, embarqué à bord du véhicule 12 automobile autonome, effectue alors la conduite longitudinale et latérale dans un cas d'utilisation défini et est apte à reconnaître ses limites de performance pour demander alors au conducteur de reprendre la conduite dynamique avec une marge de temps suffisante.

Le niveau 4 d'automatisation élevée correspond à un niveau pour lequel le conducteur n'est pas requis dans un cas d'utilisation défini. Selon ce niveau 4, le dispositif électronique de conduite autonome 26, embarquée à bord du véhicule 12 automobile autonome, exécute alors la conduite dynamique latérale et longitudinale dans toutes les situations de ce cas d'utilisation défini.

Le niveau 5 d'automatisation complète correspond enfin à un niveau pour lequel le dispositif électronique de conduite autonome 26, embarqué à bord du véhicule 12 automobile autonome, effectue la conduite dynamique latérale et longitudinale dans toutes les situations rencontrées par le véhicule 12 automobile autonome, pendant tout son trajet. Aucun conducteur n'est alors requis.

Chaque véhicule 12 comprend en outre un module de réception de commandes 28, un module de transmission 30 et un module d'envoi 32.

Le module de réception de commandes 28 est propre à recevoir au moins une commande de mouvement de la part du dispositif de surveillance 14.

Une commande de mouvement est par exemple une commande de modification de trajectoire du véhicule 12, une commande de contournement de l'obstacle 22, une commande d'ignorance de l'obstacle 22, une commande d'attente, une commande de ralentissement ou une commande d'arrêt du véhicule 12.

Le module de réception de commandes 28 est propre à transmettre l'au moins une commande au module de transmission 30.

Le module de transmission 30 est propre à transmettre l'au moins une commande de mouvement au reste du véhicule 12.

En particulier, le module de transmission 30 est propre à transmettre la commande au dispositif électronique de conduite autonome 26 du véhicule 12. Le dispositif électronique de conduite autonome 26 est alors configuré pour mettre en œuvre la commande.

Le module d'envoi 32 est propre à recevoir l'au moins une information détectée par l'au moins un capteur embarqué 24 dans l'un des véhicules 12.

Le module d'envoi 32 est propre à envoyer l'au moins une information au dispositif de surveillance 14.

Le dispositif électronique de conduite autonome 26, le module de réception de commandes 28, le module de transmission 30 et le module d'envoi 32 sont typiquement réalisés sous la forme de logiciels stockés dans une mémoire (non représentée) et aptes à être exécutés par un processeur (non représenté) associé à ladite mémoire, la mémoire et le processeur formant ensemble une unité de traitement d'informations incluse dans le véhicule 12. En variante, le dispositif électronique de conduite autonome 26, le module de réception de commandes 28, le module de transmission 30 et le module d'envoi 32 sont réalisés sous la forme d'un composant logique programmable ou sous la forme d'un circuit intégré dédié inclus dans la voiture 12.

Chaque capteur d'infrastructure 13 est disposé le long des voies de circulation 18. En particulier, chaque capteur d'infrastructure 13 est situé à une distance inférieure à 500 m des voies de circulation 18. Chaque capteur d'infrastructure 13 est par exemple fixe, au sens où sa position géographique ne varie pas au cours du temps, tout en permettant une rotation du capteur d'infrastructure 13 autour d'au moins un axe.

Chaque capteur d'infrastructure 13 est propre à détecter au moins une information sur l'environnement du capteur d'infrastructure 13. En particulier, chaque capteur d'infrastructure 13 est par exemple une caméra, un capteur de température, un capteur de pression, un capteur d'humidité ou un lidar.

Chaque capteur d'infrastructure 13 est propre à envoyer l'au moins une information au dispositif de surveillance 14.

Le dispositif de surveillance 14 est disposé dans un poste de contrôle 34 distant. Le poste de contrôle 34 est situé à distance des véhicules 12 et assure le contrôle des véhicules 12 par un opérateur.

Le dispositif de surveillance 14 et les véhicules 12 sont propres à communiquer entre eux.

Le dispositif de surveillance 14 comprend un module de réception d'informations 36, au moins un écran d'affichage 38 et un module de commande 40.

Le module de réception d'informations 36 est configuré pour recevoir l'au moins une information envoyée par l'au moins un capteur embarqué 24 de l'au moins une voiture 12.

Dans un mode de réalisation avantageux, le dispositif de surveillance 14 est propre à recevoir en outre des informations d'au moins un deuxième capteur. Le deuxième capteur est choisi parmi le groupe consistant en : un capteur embarqué 24 dans l'un des véhicules autonomes 12 et l'un des capteurs d'infrastructure 13 disposés à l'extérieur des véhicules autonomes 12.

Ainsi, le module de réception d'informations 36 est propre à recevoir des informations d'au moins deux capteurs embarqués 24 à bord des véhicules autonomes 12 ou propre à recevoir des informations d'au moins un capteur embarqué 24 et d'au moins l'un des capteurs d'infrastructure 13 disposés à l'extérieur des véhicules 12.

Chaque écran d'affichage 38 est propre à afficher l'au moins une information reçue par le dispositif de surveillance 14.

Le module de commande 40 est propre à envoyer au moins une commande de mouvement à la flotte de véhicules 12.

La commande de mouvement est avantageusement déterminée par l'opérateur en fonction de l'au moins une information affichée sur l'écran d'affichage 38.

Le module de réception d'informations 36 et le module de commande 40 sont typiquement réalisés sous la forme de logiciels stockés dans une mémoire (non représentée) et aptes à être exécutés par un processeur (non représenté) associé à ladite mémoire, la mémoire et le processeur formant ensemble une unité de traitement d'informations incluse dans le dispositif de surveillance 14. En variante, le module de réception d'informations 36 et le module de commande 40 sont réalisés sous la forme d'un composant logique programmable ou sous la forme d'un circuit intégré dédié inclus dans le dispositif de surveillance 14.

Chaque véhicule 12 comprend également un dispositif électronique de bridage 41A embarqué à bord du véhicule 12, propre à brider le fonctionnement dudit véhicule 12, et le dispositif de surveillance 14 comprend un dispositif électronique de bridage 41B propre à brider le fonctionnement dudit dispositif de surveillance 14.

Chaque dispositif électronique de bridage 41A, 41B comprend un module de mesure 42 et un module de limitation 44.

Le module de mesure 42 est propre à mesurer une latence dans la communication entre l'un des véhicules autonomes 12, dit véhicule d'intérêt, et le dispositif de surveillance 14.

Le module de limitation 44 est propre à limiter le pilotage du véhicule 12 d'intérêt par l'opérateur en fonction de la latence mesurée. En particulier, le module de limitation 44 est configuré pour limiter le pilotage lorsque la latence mesurée est supérieure à un seuil de sécurité prédéterminé.

Dans le cas dispositif électronique de bridage 41A, le véhicule d'intérêt est constitué par le véhicule 12 à bord duquel le dispositif électronique de bridage 41A est embarqué.

S'agissant du dispositif électronique de bridage 41A, le module de mesure 42 est en particulier configuré pour mesurer la latence entre l'envoi de l'au moins une commande par le module de commande 40 et la réception de l'au moins une commande par le module de réception de commandes 28.

La latence est typiquement mesurée par différence entre l'heure d'envoi de l'au moins une commande par le module de commande 40 et l'heure de réception de l'au moins une commande par le module de réception d'informations 36. Le module d'envoi 32 est par exemple propre à horodater l'information au moment de son envoi et le module de réception d'informations 36 est propre à horodater l'information au moment de sa réception. Le module de mesure 42 est alors propre à lire les deux horodatages et d'en faire la différence afin de déterminer la latence.

Le module de limitation 44 est alors propre à bloquer la transmission de toute commande de mouvement en fonction de la latence mesurée.

En particulier, le module de limitation 44 est propre à inhiber le module transmission 30 afin d'empêcher la transmission de la commande au dispositif électronique de conduite autonome 26 du véhicule 12 d'intérêt.

En particulier, le module de limitation 44 est propre à bloquer la transmission de toute commande de mouvement lorsque la latence mesurée est supérieure à une première valeur seuil prédéterminée. La première valeur seuil est par exemple supérieure à 100 ms.

L'inhibition du module de transmission 30 par le dispositif de bridage 41A permet d'empêcher la réception de commandes par le dispositif électronique de conduite autonome 26 du véhicule 12 d'intérêt avec un retard trop important par rapport à leur détermination par le dispositif de surveillance 14. En effet, un tel retard peut entrainer un déplacement du véhicule 12 d'intérêt qui ne serait plus pertinent en regard de la réalité actuelle de l'environnement du véhicule 12 d'intérêt. Par exemple, la réception d'une consigne de contournement de l'obstacle 22 par le véhicule 12 en traversant la ligne continue 20 est potentiellement dangereuse en cas de présence d'un autre véhicule 12 sur la voie de circulation 18 voisine et dont l'information relative à cette présence n'a pas encore été transmise au dispositif de surveillance 14. L'inhibition du module de transmission 30 permet alors de garantir la sécurité des passagers du véhicule 12 d'intérêt.

S'agissant du dispositif électronique de bridage 41B, le module de mesure 42 est en particulier configuré pour mesurer la latence entre l'envoi de l'au moins une information par le capteur embarqué 24 dans le véhicule 12 d'intérêt et l'affichage de l'au moins une information sur l'écran d'affichage 38.

La latence est typiquement mesurée par différence entre l'heure d'envoi de l'au moins une information par le capteur embarqué 24 et l'heure l'affichage de l'au moins une information sur l'écran d'affichage 38. Le module de commande 40 est par exemple propre à horodater la commande au moment de son envoi et le module de réception de commandes 28 est propre à horodater la commande au moment de sa réception. Le module de mesure 42 est alors propre à lire les deux horodatages et d'en faire la différence afin de déterminer la latence.

Le module de limitation 44 est alors propre à bloquer l'envoi par le module de commande 40 de toute commande de mouvement au véhicule 12 d'intérêt en fonction de la latence mesurée.

En particulier, le module de limitation 44 est propre à bloquer l'envoi de toute commande de mouvement au véhicule 12 d'intérêt lorsque la latence mesurée est supérieure à une deuxième valeur seuil prédéterminée. La deuxième valeur seuil est par exemple supérieure à 200 ms.

Le blocage de l'envoi de commande permet d'éviter un déplacement dangereux du véhicule d'intérêt 12 lorsque la réception d'informations par le dispositif de surveillance 14 est effectuée avec un retard trop important par rapport à leur envoi par l'au moins un capteur embarqué 24 du véhicule 12 d'intérêt. En effet, un tel retard peut entrainer la détermination d'une consigne de mouvement qui ne serait plus pertinente en regard de la réalité actuelle de l'environnement du véhicule 12 d'intérêt. Le blocage de l'envoi de commande permet alors de garantir la sécurité des passagers du véhicule 12 d'intérêt.

Avantageusement, le module de limitation 44 est également propre à désactiver la communication entre le dispositif de surveillance 14 et au moins l'un des véhicules 12 de la flotte, notamment un véhicule 12 différent du véhicule 12 d'intérêt.

En particulier, le module de limitation 44 est propre à désactiver la communication entre le dispositif de surveillance 14 et un véhicule 12 présentant un risque de sécurité pour les passagers moins grave que pour le véhicule 12 d'intérêt.

La désactivation de la communication avec au moins l'un des véhicules 12 permet de diminuer le flux d'informations remonté par les voitures 12 au dispositif de surveillance 14 et ainsi de diminuer la latence de la communication entre le dispositif de surveillance 14 et le véhicule 12 d'intérêt.

Dans un mode de réalisation avantageux, lorsque le dispositif de surveillance 14 est propre à recevoir des informations d'au moins deux capteurs embarqués 24 du véhicule 12 d'intérêt et/ou d'un capteur d'infrastructure 13, le module de limitation 44 est propre à désactiver la communication entre le dispositif de surveillance 14 et au moins l'un des capteurs 24, 13.

En particulier, le module de limitation 44 est propre à déterminer un niveau de criticité associé à chaque capteur 24, 13. Le niveau de criticité traduit l'impact potentiel des informations remontées par le capteur 24, 13 sur le pilotage du véhicule 12 d'intérêt par l'opérateur. Le niveau de criticité d'un capteur est d'autant plus élevé que l'au moins une information remontée aura un impact fort sur les consignes envoyées par l'opérateur. Ainsi, à titre d'exemple, le niveau de criticité associé à une caméra est supérieur à celui associé à un capteur de température.

Le module de limitation 44 est propre à désactiver la communication entre le dispositif de surveillance 14 et le ou les capteurs 24, 13 présentant le niveau de criticité le plus faible.

La désactivation de la communication avec au moins un capteur 24, 13 permet de diminuer le flux d'informations remonté par les capteurs 24, 13 au dispositif de surveillance 14 et d'ainsi diminuer la latence de la communication.

Le dispositif électronique de bridage 41B comprend également un module d'alerte 46.

Le module d'alerte 46 est propre à émettre un signal d'alerte en fonction de la latence calculée. En particulier, le module d'alerte 46 est propre à envoyer le signal d'alerte à l'au moins un écran d'affichage 38, l'écran d'affichage 38 étant propre à afficher le signal d'alerte.

Le module d'alerte 46 est avantageusement propre à émettre un signal d'alerte lorsque la latence mesurée est supérieure à un seuil d'alerte prédéterminé. Le seuil d'alerte est notamment inférieur au seuil de sécurité. Par exemple, le seuil d'alerte est égal à 75 ms.

Ainsi, l'affichage d'un message d'alerte permet à l'opérateur d'anticiper un éventuel bridage dû à une latence trop élevée et d'effectuer des opérations permettant de réduire la latence comme par exemple couper la communication avec l'un des véhicules 12 de la flotte ou désactiver la communication avec au moins un capteur 24, 13.

Le module de mesure 42, le module de limitation 44 et le module d'alerte 46 sont typiquement réalisés sous la forme de logiciels stockés dans une mémoire (non représentée) et aptes à être exécutés par un processeur (non représenté) associé à ladite mémoire, la mémoire et le processeur formant ensemble une unité de traitement d'informations incluse dans le dispositif de bridage 41A, 41B. En variante, le module de mesure 42, le module de limitation 44 et le module d'alerte 46 sont réalisés sous la forme d'un composant logique programmable ou sous la forme d'un circuit intégré dédié inclus dans le dispositif de bridage 41A, 41B.

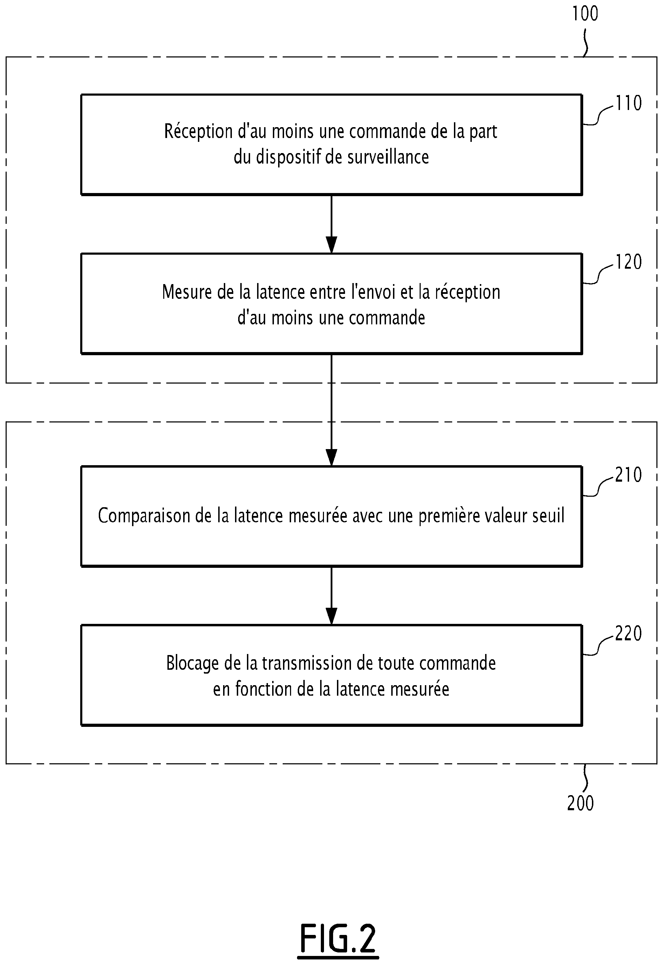

Un procédé de bridage du pilotage à distance d'un véhicule automobile autonome 12, mis en œuvre par le dispositif électronique de bridage 41A va maintenant être décrit, en référence à la figure 2.

Le procédé de bridage comprend une première étape 100 de calcul d'une latence dans la communication entre le dispositif de surveillance 14 et le véhicule 12, dit véhicule d'intérêt, à bord duquel est embarqué le dispositif électronique de bridage 41A.

L'étape 100 est suivie d'une étape 200 de limitation du pilotage du véhicule 12 d'intérêt par l'opérateur en fonction de la latence calculée.

Avantageusement, la limitation du pilotage est effectuée lorsque la latence mesurée est supérieure à un seuil de sécurité prédéterminé.

Ici, l'étape 100 comprend une première sous-étape 110 de réception par le module de réception de commandes 28 d'au moins une commande envoyée par le dispositif de surveillance 14.

La sous-étape 110 est suivie d'une sous-étape 120 de mesure de la latence entre l'envoi de l'au moins une commande par le module de commande 40 et la réception de l'au moins une commande par le module de réception de commandes 28.

Puis l'étape 200 comprend au moins une première sous-étape 210 de comparaison de la latence mesurée avec la première valeur seuil.

Puis l'étape 200 comprend une sous-étape 220 de blocage de la transmission de toute commande de mouvement en fonction de la latence calculée.

En particulier, le module de limitation 44 inhibe le module transmission 30 au cours de cette étape 220 afin d'empêcher la transmission de la commande au dispositif électronique de conduite autonome 26 du véhicule 12 d'intérêt.

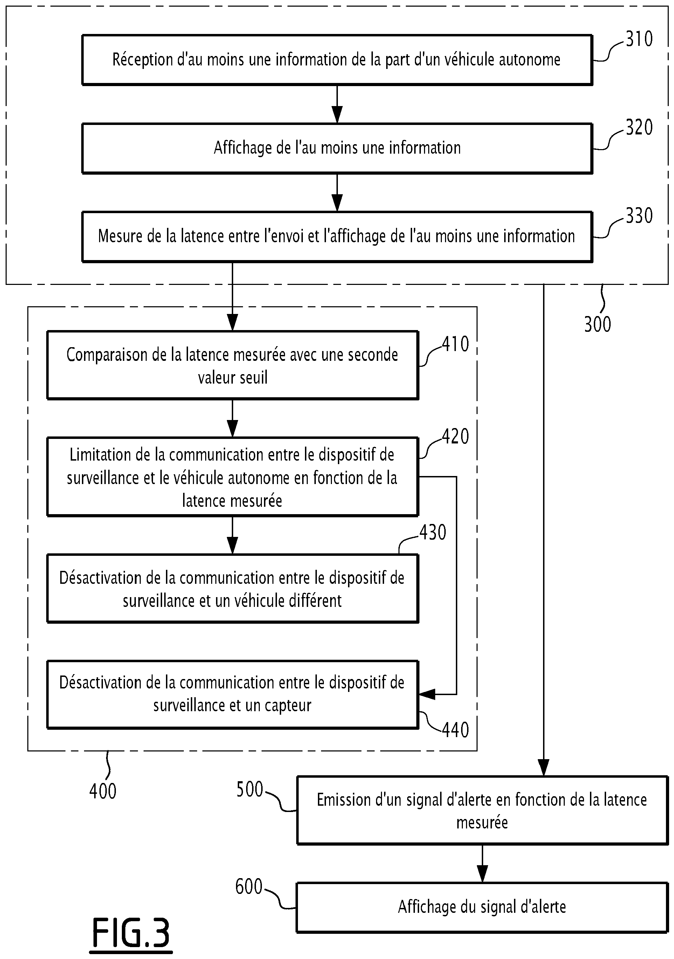

Un procédé de bridage du pilotage à distance d'un véhicule automobile autonome 12, mis en œuvre par le dispositif électronique de bridage 41B va maintenant être décrit, en référence à la figure 3.

Le procédé de bridage comprend une première étape 300 de calcul d'une latence dans la communication entre le dispositif de surveillance 14 et un véhicule 12, dit véhicule d'intérêt.

L'étape 300 est suivie d'une étape 400 de limitation du pilotage du véhicule 12 d'intérêt par l'opérateur en fonction de la latence calculée.

Avantageusement, la limitation du pilotage est effectuée lorsque la latence mesurée est supérieure à un seuil de sécurité prédéterminé.

Ici, l'étape 300 comprend une première sous-étape 310 de réception par le module de réception d'informations 36 de l'au moins une information envoyée par au moins l'un des capteurs embarqués 24 du véhicule 12 d'intérêt et avantageusement par l'un des capteurs d'infrastructure 13.

Puis lors de la sous-étape 320, l'au moins une information est affichée sur l'écran d'affichage 38.

La sous-étape 320 est suivie d'une sous-étape 330 de mesure de la latence entre l'envoi de l'au moins une information par le capteur embarqué 24 et l'affichage de l'au moins une information sur l'écran d'affichage 38.

L'étape 400 comprend une première sous-étape 410 de comparaison de la latence mesurée avec la deuxième valeur seuil.

Puis l'étape 400 comprend une sous-étape 420 de limitation de la communication entre le dispositif de surveillance 14 et le véhicule 12 d'intérêt en fonction de la latence calculée.

En particulier, le module de limitation 44 bride le module de commande 40 afin d'empêcher l'envoi de commandes à destination du véhicule 12 d'intérêt.

Puis lors d'une sous-étape optionnelle 430, le module de limitation 44 désactive la communication entre le dispositif de surveillance 14 et au moins l'un des véhicules 12 de la flotte, notamment différent du véhicule 12 d'intérêt et présentant un risque de sécurité moins important que le véhicule 12 d'intérêt.

Dans un mode de réalisation avantageux, lorsque le dispositif de surveillance 14 reçoit des informations d'au moins deux capteurs embarqués 24 du véhicule 12 d'intérêt et/ou d'un capteur d'infrastructure 13, l'étape 400 comprend également une sous-étape 440 de désactivation de la communication entre le dispositif de surveillance 14 et au moins l'un des capteurs 24, 13.

En particulier, le module de limitation 44 désactive la communication entre le dispositif de surveillance 14 et le ou les capteurs 24, 13 présentant le niveau de criticité le plus faible.

Le procédé de bridage comprend optionnellement une étape 500 faisant suite à l'étape 300. Cette étape 500 est une étape d'émission d'un signal d'alerte en fonction de la latence calculée.

En particulier, lors de cette étape 500, le module d'alerte 46 envoie le signal d'alerte à l'au moins un écran d'affichage 38.

Puis lors d'une étape 600, l'écran d'affichage 38 affiche le signal d'alerte.

Le module d'alerte 46 émet avantageusement un signal d'alerte lorsque la latence mesurée est supérieure à un seuil d'alerte prédéterminé inférieur au seuil de sécurité.

Grâce à l'invention décrite ci-dessus, la sécurité des passagers du véhicule est significativement améliorée. En effet, l'inhibition du module de transmission 30 et/ou le blocage de l'envoi de commande en cas de latence mesurée trop importante permet d'éviter un déplacement du véhicule 12 qui ne serait plus pertinent en regard de la réalité actuelle de l'environnement du véhicule 12.

En outre, la désactivation de la communication avec un autre véhicule 12 de la flotte et/ou avec au moins un capteur 24, 13 permet de diminuer le flux d'informations échangé avec le dispositif de surveillance 14 et ainsi de diminuer la latence de la communication entre le dispositif de surveillance 14 et le véhicule 12 d'intérêt pour permettre un pilotage du véhicule 12 d'intérêt plus adéquate avec la réalité par l'opérateur.

Enfin, l'affichage d'un message d'alerte permet à l'opérateur d'anticiper un éventuel bridage dû à une latence trop élevée et d'effectuer des opérations permettant de réduire la latence de communication.

## Revendications

1. Dispositif électronique de bridage (41A, 41B) pour brider le fonctionnement d'un système, le système étant choisi parmi le groupe consistant en :
- un dispositif de surveillance (14) à distance d'une flotte de véhicules automobiles autonomes (12) pour le pilotage à distance de la flotte par un opérateur ; et
- un véhicule autonome (12) appartenant à une flotte de véhicules (12) surveillés par un dispositif de surveillance (14) à distance permettant le pilotage à distance de la flotte par un opérateur ;
le dispositif de surveillance (14) et le ou chaque véhicule autonome (12) étant propres à communiquer entre eux, le dispositif électronique de bridage (41A, 41B) comprenant :
- un module de mesure (42) d'une latence dans la communication entre l'un des véhicules autonomes (12) et le dispositif de surveillance (14) ; et
- un module de limitation pour limiter le pilotage dudit véhicule autonome (12) par l'opérateur en fonction de la latence mesurée.

2. Dispositif électronique de bridage (41A, 41B) selon la revendication 1, dans lequel le module de limitation (44) est configuré pour limiter le pilotage lorsque la latence mesurée est supérieure à un seuil de sécurité prédéterminé.

3. Dispositif de surveillance (14) comprenant un dispositif électronique de bridage (41B) selon la revendication 1 ou 2, le ou chaque véhicule autonome (12) comprenant au moins un capteur embarqué (24) propre à envoyer au moins une information au dispositif de surveillance (14), le dispositif de surveillance (14) étant propre à recevoir au moins une information d'au moins un premier capteur constitué par un capteur embarqué (24) à bord de l'un des véhicules autonomes (12) et comprenant au moins un écran d'affichage (38) propre à afficher l'au moins une information, le module de mesure (42) étant configuré pour mesurer la latence entre l'envoi de l'au moins une information par le premier capteur et l'affichage de l'au moins une information sur l'écran d'affichage (38).

4. Dispositif de surveillance (14) selon la revendication 3, dans lequel le dispositif de surveillance (14) comprend un module de commande (40) propre à envoyer au moins une commande de mouvement à la flotte, le module de limitation (44) étant propre à bloquer l'envoi de toute commande de mouvement au véhicule autonome (12).

5. Dispositif de surveillance (14) selon la revendication 3 ou 4, dans lequel le dispositif de surveillance (14) est propre à recevoir au moins une information d'au moins un deuxième capteur, le deuxième capteur étant choisi parmi le groupe consistant en : un capteur embarqué (24) à bord de l'un des véhicules autonomes (12) et un capteur d'infrastructure (13) disposé à l'extérieur des véhicules autonomes (12), le module de limitation (44) étant propre à désactiver la communication entre le dispositif de surveillance (14) et l'au moins un deuxième capteur.

6. Dispositif de surveillance (14) selon l'une quelconque des revendications 3 à 5, dans lequel le module de limitation (44) est propre à désactiver la communication entre le dispositif de surveillance (14) et au moins l'un des véhicules (12) de la flotte.

7. Dispositif de surveillance (14) selon l'une quelconque des revendications 3 à 6, dans lequel le dispositif de bridage (41B) comprend un module d'alerte (46) propre à émettre un signal d'alerte en fonction de la latence calculée, l'écran d'affichage (38) étant propre à afficher le signal d'alerte.

8. Véhicule automobile autonome (12) comprenant un dispositif électronique de bridage (41A) selon la revendication 1 ou 2, le dispositif de surveillance (14) comprenant un module de commande (40) propre à envoyer au moins une commande de mouvement à la flotte, le véhicule automobile autonome (12) comprenant au moins un module de réception (28) propre à recevoir l'au moins une commande, le module de mesure (42) étant configuré pour mesurer la latence entre l'envoi de l'au moins une commande par le module de commande (30) et la réception de l'au moins une commande par le module de réception (28).

9. Véhicule automobile autonome (12) selon la revendication 8, dans lequel le véhicule (12) comprend un module de transmission (30) propre à transmettre l'au moins une commande au reste du véhicule, le module de limitation (44) étant propre à bloquer la transmission de toute commande de mouvement.

10. Système de transport (10) comprenant :
- un dispositif de surveillance (14) selon l'une quelconque des revendications 3 à 7; et
- une flotte de véhicules automobiles autonomes (12) surveillée à distance par le dispositif de surveillance (14), au moins un des véhicules automobiles autonomes (12) étant selon la revendication 8 ou 9.

11. Procédé de bridage du pilotage à distance d'un véhicule automobile autonome (12) appartenant à une flotte de véhicules automobiles autonomes (12) surveillée au moyen d'un dispositif de surveillance (14) à distance permettant le pilotage à distance de la flotte par un opérateur, le procédé de bridage comprenant les étapes suivantes :
- calcul d'une latence dans la communication entre l'un des véhicules automobiles automnes (12) et le dispositif de surveillance (14) ; et
- limitation du pilotage dudit véhicule autonome (12) par l'opérateur en fonction de la latence calculée.

12. Produit programme ordinateur comportant les instructions logicielles qui, lorsque mises en œuvre par un équipement informatique, mettent en œuvre le procédé de bridage selon la revendication 11.
